# EUROPEAN PATENT SPECIFICATION

(11) **EP 3 906 613 B1**
(45) Date of publication and mention of the grant of the patent: **22.11.2023**
(21) Application number: 19726937.6
(22) Date of filing: 21.05.2019
(51) Int. Cl.: H02M 3/335, H02M 1/00

(54) **HIGH EFFICIENCY CONVERTER AND ITS CONTROL METHOD**
HOCHLEISTUNGSWANDLER UND DESSEN STEUERUNGSVERFAHREN
CONVERTISSEUR À HAUTE EFFICACITÉ ET SON PROCÉDÉ DE COMMANDE

(43) Date of publication of application: 10.11.2021
(73) Proprietor: Huawei Digital Power Technologies Co., Ltd., Futian District, Shenzhen, Guangdong 518043 (CN)
(72) Inventor: HU, Zhixiang, 80992 Munich (DE); ZHANG, Xingzhong, 80992 Munich (DE); CHEN, Haitao, 80992 Munich (DE)
(74) Representative: Gill Jennings & Every LLP
(86) International application number: PCT/EP2019/063093
(87) International publication number: WO 2020/233792

(56) References cited:
- EP-A1- 3 337 023
- US-A1- 2003 038 612
- US-A1- 2018 191 280

## Description

### BACKGROUND

The present disclosure, in some implementations thereof, relates to a power converter, and more specifically, but not exclusively, to a power converter for an on-board charger of an electric vehicle.

Vehicle electrification is being promoted by many local and national governments in response to the urgent need for reducing fossil fuel consumption and emissions of carbon dioxide and other greenhouse gases and harmful particulates from the transportation sector. To help accelerate the acceptance of electric vehicles, low-cost on-board chargers are highly desirable. In addition, chargers with bidirectional power flow capability can enhance the functionality and value of the vehicles by providing additional capabilities.

An ideal on-board charger should have high power density and high efficiency in order to have the highest energy utilization and facilitate packaging. One of the most important requirements of the on-board charger is efficiency. Currently, known on-board chargers can achieve efficiency of no more than 96.5%.

A solution commonly used in the market is single stage power conversion. Single stage power conversion means that one converter implements both the function of power factor correction and DC/DC conversion. The control and driver for single stage power conversion apparatuses are complicated. Another solution is a two-stage power conversion, where the power factor correction and DC/DC conversion work separately. The main issue with this approach is that the power needs to be converted two times, which requires narrow output voltage range and reduced system efficiency.

EP3337023A1 relates to power conversion device and power conversion system.

### SUMMARY

It is an object of the present disclosure to provide a new topology of a 1.5 stage variable gain partial control power converter and its control method, with high efficiency. The expected peak efficiency is 98%. The output voltage is partially controlled, and the portion of the output voltage that is partially controlled can be configured as different output voltage. This function allows for a very high range of output power. It is another object of the present disclosure to provide a method for power conversion that provides a high range of output power at high efficiency.

The invention has been defined in the independent claims 1 and 6.

Further specific technical features have been defined in the dependent claims.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of implementations of the disclosure, exemplary methods and/or materials are described below. In case of conflict, the patent specification, including definitions, will control. In addition, the materials, methods, and examples are illustrative only and are not intended to be necessarily limiting.

The invention has been defined, according to a first aspect, in claim 1.

In another possible implementation of the power converter according to the first aspect, the plurality of DC/DC closed loop converters comprises at least one voltage step down converter. Advantageously, the voltage step down converter may be used to step down the voltage from a high voltage input to a lower voltage required by an electric vehicle battery.

In another possible implantation of the power converter according to the first aspect, at least 90% of the output voltage derives from a DC/DC closed loop converter in a straight-through operating state. Advantageously, deriving a large percentage of the output with a converter in the straight-through operating state promotes efficiency of the conversion.

In another possible implementation of the power converter according to the first aspect, at least 98% of the output voltage derives from a DC/DC closed loop converter in the straight-through operating state when the output voltage of the power converter is 380 V dc. Advantageously, the power converter may be configured to achieve this maximum efficiency at a voltage commonly used for on-board chargers of electric vehicles.

In another possible implementation of the power converter according to the first aspect, an electric vehicle with an on-board charger incorporates the power converter. Advantageously, the on-board charger may be used to power a battery of an electric vehicle.

The invention has been defined, according to a second aspect, in claim 6.

An advantage of the disclosed method is that the full range of load efficiency is high. Most of the power is converted by the open loop topology and the closed-loop converter in the through state. The closed loop control topology converts only a small portion of the power, and the closed-loop topology with a straight-through state has a high power density. By increasing the proportion of the output power in the through state, the method achieves high efficiency and a high range of output power.

In another possible implementation of the method according to the second aspect, the plurality of DC/DC closed loop converters comprise at least one voltage step down converter. Advantageously, the voltage step down converter may be used to step down the voltage from a high voltage input to a lower voltage required by an electric vehicle battery.

In another possible implementation of the method according to the second aspect, the outputting step comprises outputting a voltage of between 0 and 500 volts. Advantageously, the method may be used to output specific voltages as required by any particular battery of an electric vehicle.

In another possible implementation of the method according to the second aspect, the method further comprises transmitting at least 90% of the outputted converted power through a DC/DC closed loop converter in the straight through operating state. Advantageously, deriving a large percentage of the output with a converter in the straight-through operating state promotes efficiency of the conversion.

In another possible implementation of the method according to the second aspect, the method further comprises achieving a straight-through power ratio of at least 98% when the output voltage of the power converter is 380 V dc. Advantageously, the method achieves this maximum efficiency at a voltage commonly used for on-board chargers of electric vehicles.

### BRIEF DESCRIPTION OF THE SEVERAL VIEWS OF THE DRAWINGS

Some implementations of the disclosure are herein described, by way of example only, with reference to the accompanying drawings. With specific reference now to the drawings in detail, it is stressed that the particulars shown are by way of example and for purposes of illustrative discussion of implementations of the disclosure. In this regard, the description taken with the drawings makes apparent to those skilled in the art how implementations of the disclosure may be practiced.

In the drawings:
FIG. 1 is a schematic block diagram of a power converter according to implementations of the disclosure;
FIG. 2 is a more detailed block diagram of the power converter of FIG. 1;
FIG. 3 is a chart depicting a power output function of the high power converter of FIG. 1;
FIG. 4 is a chart depicting a mode switching scheme of the power converter of FIG. 1;
FIG. 5 is a chart depicting the straight through power ratio of the power converter of FIG. 1;
FIG. 6 is a chart comparing the efficiency of the power converter of FIG. 1 with the efficiency of a prior art CLLC topology;
FIG. 7 is a schematic block diagram of a power converter, according to an example;
FIG. 8 is a more detailed block diagram of the power converter of FIG. 7; and
FIG. 9 is a chart depicting the mode switching scheme of the high efficiency converter of FIG. 7; and
FIG. 10 is a schematic diagram showing the power converter of implementations of the disclosure installed within an on-board charger of an electric vehicle.

### DETAILED DESCRIPTION

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

The present disclosure, in some implementations thereof, relates to a power converter, and more specifically, but not exclusively, to a power converter for an on-board charger of an electric vehicle.

Before explaining at least one implementation of the disclosure in detail, it is to be understood that the disclosure is not necessarily limited in its application to the details of construction and the arrangement of the components and/or methods set forth in the following description and/or illustrated in the drawings and/or the Examples. The disclosure is capable of other implementations or of being practiced or carried out in various ways.

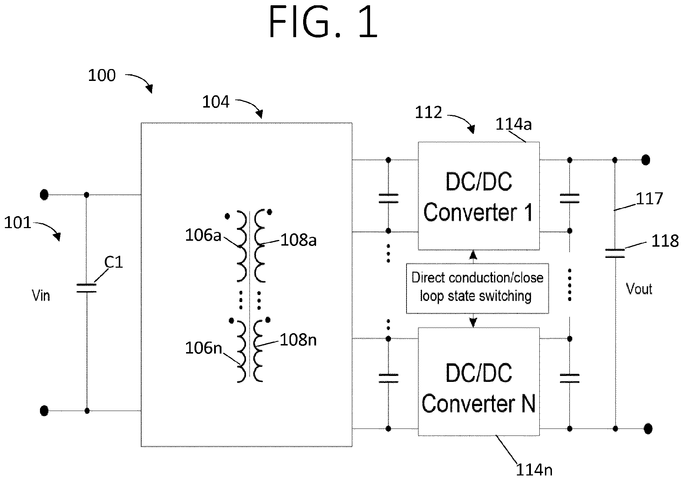

Referring to FIG. 1, a schematic block diagram of power converter 100 is disclosed. Power converter 100 is a 1.5 stage variable gain power converter. As used in this disclosure, the term "1.5 stage" refers to a topology in which all of the input power is converted through a first power conversion stage, but only a portion of the power is converted through a second power conversion stage.

In the implementation of FIG. 1, power is input from input power source 101 to transformer isolated open loop converter 104. A capacitor C1 at input power source 101 may regulate the power entering the transformer isolated open loop converter 104 to limit the effects of random fluctuations.

Input power source 101 is a source of DC power. In cases in which the power converter utilizes AC power (e.g., standard wall power), the power converter 100 may also comprise rectification circuitry (not shown) for converting the AC input voltage and current into DC form. The input converter may also comprise power-factor-correcting circuitry (also not shown).

Transformer isolated open loop converter 104 consists of a primary winding 106 and a plurality of secondary windings 108a-n. In the illustrated implementation, there are a plurality of primary windings 106 as well. In such implementations, the primary windings 106 deliver power at the same voltage and are functionally equivalent. By contrast, secondary windings 108a-n differ in their output voltages, as will be discussed further herein.

As used in the pending disclosure, the notation [reference numeral]a-n indicates that there may be up to an infinite number of identical elements connected in parallel. In theory, the number of identical elements may be bounded only by considerations of size. Increasing the number of elements may promote the ability of the power converter 100 to regulate an output voltage at maximum efficiency. In the illustrated implementations, there are two identical elements, denoted by the notation [reference numeral]a and [reference numeral]b. As will be discussed further herein, power converter 100 converts at high efficiency even with only two such identical elements.

After the power is converted through the transformer isolated open loop converter, the rectified voltage is passed through closed loop topology 112. Closed loop topology 112 comprises a plurality of DC/DC closed loop converters 114a-n. An input of each of the DC/DC closed loop converters 114 is connected to an output of a respective secondary winding 108.

Each of the DC/DC closed loop converters 114 of the closed loop topology 112 can be switched between a straight-through operating state and a closed-loop operating state. In the straight-through operating state, the switches of the closed-loop converter 114 (not shown in FIG. 1) are configured so that power passes directly through closed loop converter 114 without being modified. In the closed-loop state, the power is controlled according to the configuration of the switches in order to achieve a desired voltage. For example, the DC/DC closed loop converter 114 may be a voltage step down converter, and the output voltage may be regulated in accordance with the duty cycle of the voltage step down converter. A voltage step down converter may also be referred to as a buck converter. Alternatively, the DC/DC closed loop converter may be of any other configuration known to those of skill in the art, such as a forward converter, a flyback converter, a push-pull converter, a boost converter, or a buck-boost converter.

Power is distributed between the DC/DC closed loop converters 114 in such a way that most of the power is converted by the transformer isolated open loop converter 104 and the DC/DC closed loop converter 114 when it is in the straight-through state. The closed-loop control topology converts only a small portion of the power. The closed-loop topology with a straight-through state has a high power density. Following processing of the power through the closed loop topology 112, the output power is connected in series and delivered to the load (represented schematically by trace 117 with capacitor 118).

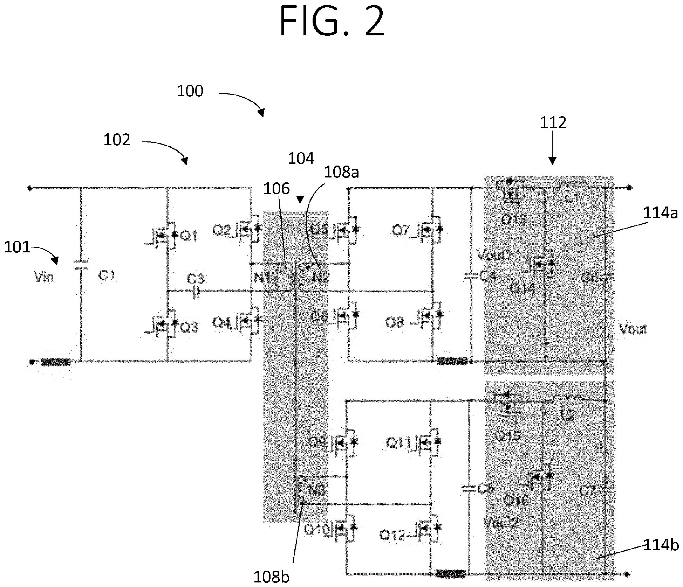

FIG. 2 depicts a circuit diagram of power converter 100. As depicted in FIG. 2, capacitor C1 is situated at the input 101. Transformer isolated open loop converter 104 may include open-loop LLC topology 102. The open-loop LLC topology 102 includes transistors Q1, Q2, Q3, and Q4, as well as capacitor C3. In the illustrated implementations, each of the transistors is depicted as an n-channel MOSFET (metal-oxide semiconductor field effect transistor). Low-voltage MOSFETs may be used in order to minimize conduction losses. The transistors are each configurable between an off state, in which current does not flow through the transistors, and an on state, in which current proceeds through the transistors to the primary winding 106. Open loop LLC topology 102 always works at the resonance point.

Transformer isolated open loop converter 104 has three windings, primary winding 106 (also labeled N1) and secondary windings 108a and 108b (also labeled N2 and N3). The output voltage of the two secondary windings N2, N3 is then bridged and rectified with transistors Q5-Q12. Transistors Q5-Q12 are also depicted as n-channel MOSFETs. The output voltage is then connected to two buck circuits 114a, 114b. Buck circuits 114a, 114b may also be referred to as voltage step down circuits. Capacitors C4 and C5 are situated between transistors Q5-Q12 and buck circuits 114.

Transistors Q1-Q4, Q5-Q8, and Q9-Q12 are the main switching devices of the open loop LLC converter 104. The switching frequency is fixed and is equal to the resonant frequency of the open loop LLC converter 104. The duty cycle for the open loop LLC converter 104 is fixed at approximately 50%. The switching frequency and duty cycle for transistors Q1-Q12 remains the same regardless of changes in input and output voltage.

Each buck circuit 114 includes two transistors Q13 and Q14 orQ15 and Q16, inductorL1 orL2, and capacitor C6 or C7. The transistors serve as switches. When the buck circuit 114 is in a straight-through operating state, transistors Q13 and Q14, and transistors Q15 and Q16, are configured in a through state, in which one of the paired transistors is always in an on state, while the other is always in an off state. By contrast, when buck circuit 114 is in a closed loop operating state, the transistors Q13 and Q14, and Q15 and Q16 are in a switching state, and switch on and off in accordance with closed loop control feedback from the output of the buck circuit 114.

Advantageously, configuring a plurality of buck circuits 114 in this fashion helps minimize power losses. The switching of a buck circuit in a closed loop control state causes loss of energy due to various factors, such as switching loss and conduction loss. Switching loss refers to losses while the transistors Q13 and Q14, or Q15 and Q16, are transitioning from an off state to a fully on state. Conduction loss refers to voltage drop due to the functioning of the transistors Q13-Q16 themselves, when they are in the on position. In addition, inductors L1, L2 work in a large ripple current state, which has great AC loss and core loss. When a voltage step down converter 114 is in the through state, by contrast, switching loss is zero, and only one device's conduction loss exists. In addition, the inductance also works in a no ripple current state, and therefore does not have AC loss and core loss.

The output voltage of each of the buck circuits 114 is then connected in series and delivered to the load (not shown). The load may be a battery for an electric vehicle, for example.

The basic principle of operation of power converter 100 is thus based on a quasi-parallel architecture scheme, adding a closed-loop topology with straight-through and closed-loop state switching functions, increasing the function of changing the gain of the output through-state voltage, and increasing the proportion of the output power of the through state.

The turns ratio of the transformer isolated open loop converter 104 is set according to the desired input and output voltages, in order to maximize the amount of voltage that is converted in the straight-through state. In one example, the turns ratio of the N1:N2:N3 windings is 8:4:7.

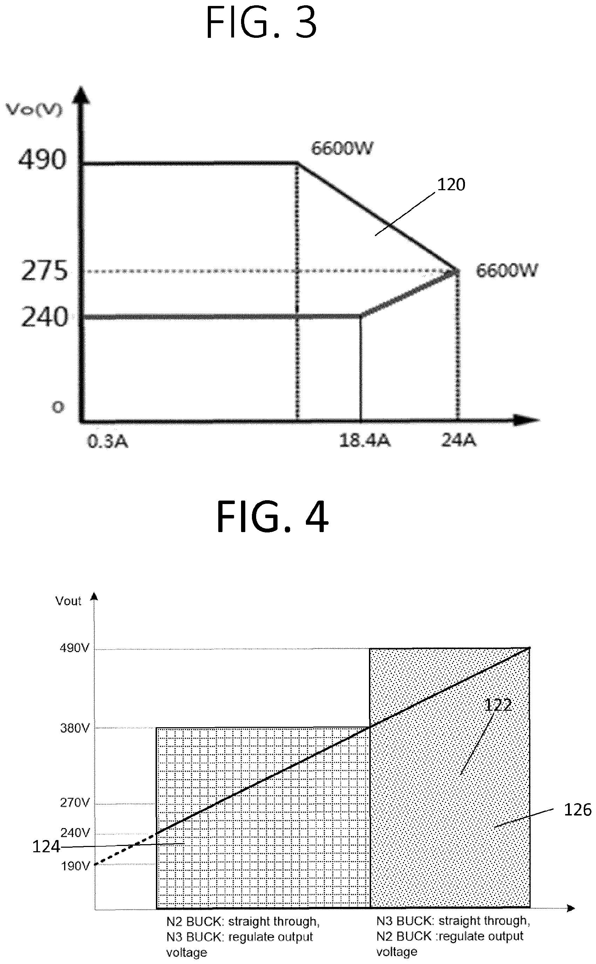

FIG. 3 depicts an exemplary output function of the power converter 100, according to some implementations. The output voltage and current are inversely correlated, so that the total power output remains constant. In the illustrated implementation, the maximum total power, represented by downwardly sloping line 120, is 6600 W. For example, the output may be set at 275 volts, at a current of 24A. The output may also be set at 490 volts, or at 240 volts, with corresponding changes in the current. These values are merely exemplary, and other voltage and current combinations may be employed.

FIG. 4 illustrates the mode switching scheme of the power converter 100, according to some implementations. In the example of FIG. 4, the power converter 100 is set up as in FIG. 2, with one primary winding 106 or N1 and two secondary windings 108a, 108b (N2 and N3). In this example, as discussed above, the turns ratio of N1:N2:N3 is 8:4:7. Thus, when the input voltage is 380 Vdc, the output voltage at N2 is 190 Vdc, and the output voltage at N3 is 332.5 V dc. The output voltage of the power converter 100 is represented by line 122. When the desired output voltage is in region 124 (i.e., below 380 V dc), voltage step down converter 114a associated with secondary winding N2 is configured in the straight-through state, and the voltage step down converter 114b associated with secondary winding N3 is in closed loop control and regulates the output voltage. In this way, more of the output voltage is comprised of voltage passing through the straight-through state at 190V. When the desired output voltage is in region 126 (i.e., above 380 V dc), the voltage step down converter 114b associated with secondary winding N3 is configured in the straight through state, and the voltage step down converter 114a associated with secondary winding N2 is in the closed loop control state to regulate the output voltage. In this way, more of the output voltage is comprised of voltage passing through the straight-through state at 332.5 V.

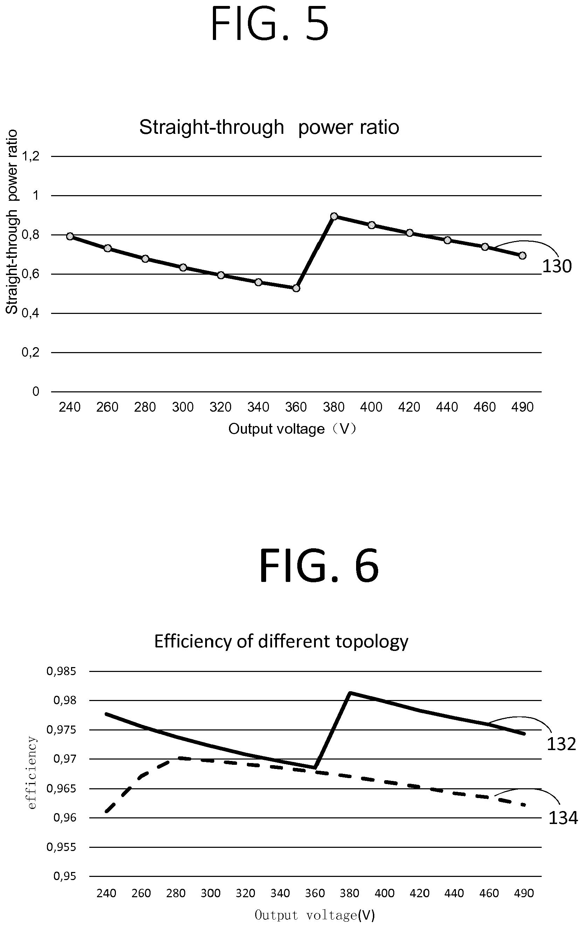

FIG. 5 depicts the straight-through power ratio (indicated by line 130) of the power converter 100 as a function of the output voltage, for the example provided of a turns ratio of 8:4:7. The straight-through power ratio is the percentage of the power that is delivered through a voltage step down converter 114 in a straight-through power state as opposed to a closed-loop power state. As can be seen, when the output voltage is around 380 V dc, the transmission power ration of the rated point is 90%.

FIG. 6 depicts the efficiency of the topology of power converter 100, as a function of output voltage. Solid line 132 represents the efficiency of power converter 100, whereas dashed line 134 represents the efficiency of a power converter functioning with a CLLC topology known in the art. As can be seen, the efficiency of power converter 100 exceeds the efficiency of a prior art CLLC power converter at all output voltages, and exceeds 98% for an output voltage of 380 V.

In an alternative implementation, rather than operating only one buck circuit 114 in closed loop mode, both buck circuits 114 may be operated simultaneously. While operating both buck circuits 114 simultaneously causes more power loss, as discussed above, the range of possible output voltages may be wider. For example, the output voltage of power converter 100 may range from 0 to 500V. This flexibility is advantageous for devices that require a wider output voltage range.

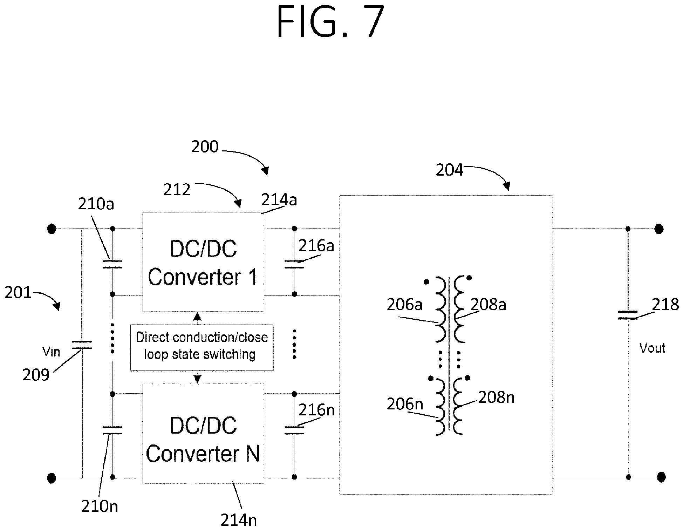

A second implementation of a power converter 200 is depicted in FIGS. 7-9. Power converter 200 has many similar features to power converter 100, and accordingly like features will be designated with like reference numerals, except that they will be preceded by the numeral "2" rather than the numeral "1."

FIG. 7 is a schematic block diagram of a second implementation 200 of a power converter, according to implementations of the disclosure. Power converter 200 is similar to power converter 100 in many respects. A key difference is that input power is first converted through closed loop topology 212, with the plurality of DC/DC closed loop converters 214a-n, and then converted through transformer isolated open loop converter 204, rather than vice versa as in power converter 100.

As seen in FIG. 7, power is input to converter 200 at input 201. Capacitor 209 is situated at input 200. The power is then conducted to closed loop topology 212, which consists of a plurality of DC/DC closed loop converters 214a-n. The input voltage of the DC/DC converters is connected in series (through capacitors 210a-n) but the output voltages of the DC/DC converters are separated.

Transformer isolated open loop winding 204 consists of a plurality of primary windings 206a-n, one for each DC/DC closed loop converter 214. The input voltage of each primary winding 206 is the output voltage of its corresponding DC/DC converter 214. Transformer isolated open loop winding 204 further includes a secondary winding 208. In the illustrated implementation, there are a plurality of secondary windings as well. In such implementations, the secondary windings all deliver power at the same voltage, and are thus functionally equivalent. After the voltage is transformed in the transformer isolated open loop winding, it is delivered to the load (not shown), *e.g.,* an integrated circuit. The output voltage is connected to capacitor 218.

As in the implementation of FIG. 1, the DC/DC closed loop converters 214a-n may work in a direct conduction state or in a closed loop switching state. The closed loop converters may be switched according to the input voltage and the desired output voltage. The switching scheme of the closed loop converters 214 may be configured so that most of the power is handled by the open loop topology 204 and the closed loop converter 214 in a through state. The closed-loop control topology only takes a small part of the power, and the closed-loop topology with a straight-through state has a high power density.

The basic principle of operation of power converter 200 is thus based on a quasi-parallel architecture scheme, adding a closed-loop topology with straight-through and closed-loop state switching functions, increasing the function of changing the gain of the output through-state voltage, and increasing the proportion of the output power of the through-state.

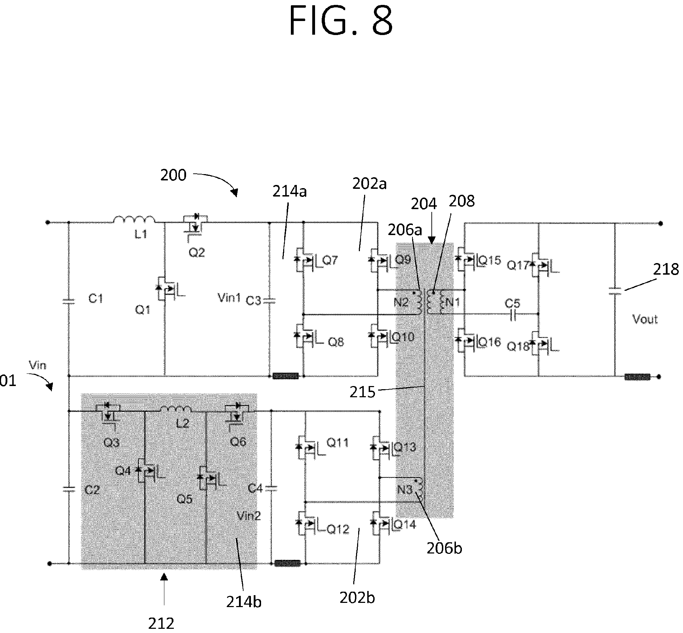

FIG. 8 is a more detailed block diagram of the power converter 200 of FIG. 7. In the illustrated implementation, closed loop DC/DC converter 214a has a topology including capacitor C1, inductor L1, and transistors Q1 and Q2. DC/DC converter 214b has a topology including capacitor C2, inductor L2, and transistors Q3, Q4, Q5, and Q6. The input voltage of DC/DC converters 214a and 214b is in series, and the output voltages are independent of each other. As discussed in connection with power converter 100, each of the DC/DC converters 214 may work in a straight through state or in a closed-loop mode. Alternatively, both of the DC/DC converters may be operated in the closed loop mode, to provide greater range in output voltage.

The output voltages are then transferred to the transformer isolated open loop winding 204 via open loop LLC topology 202a and 202b, which together form a bridge circuit. The open loop LLC topology consists of, respectively, capacitor C3 and transistors Q7-Q10, and capacitor C4 and transistors Q11-Q14. Open loop LLC topology 202 always works at the resonance point, similar to open loop LLC topology 102. The output voltages of DC/DC converters 214a and 214b are used as the input voltage of the bridge circuit 215 of the two windings N2, N3, also referred to as 206a and 206b, of the primary side of the transformer isolated open loop winding 204.

The transformer isolated open loop winding 204 has two primary windings 206a and 206b, and one primary winding 208, also referred to as N1. The transformer isolated open loop winding 204 functions as an open loop LLC converter with isolation. The output voltage from transformer isolated open loop topology 204 proceeds through an output topology including transistors Q15-Q18, capacitor C5, and capacitor 218.

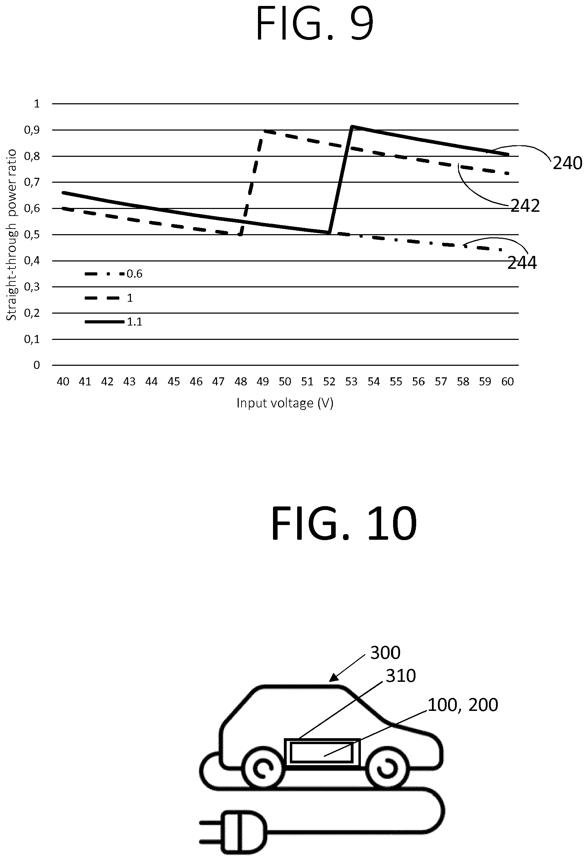

FIG. 9 is a chart depicting the mode switching scheme of power converter 200 of FIG. 7. In the example of FIG. 9, the turns ratio of the primary and secondary windings (N2:N3:N1) is 44:24:1. In one such implementation, the input voltage is between 40 and 60 Volts DC, the output voltage range is 0.6V to 1.1 V dc, and the output current is around 300 A. Advantageously, voltages at this range may be suitable for providing power to integrated circuits at high efficiency.

FIG. 9 provides the straight-through power ratio as a function of input voltage (x axis, between 40 and 60 V dc) depending on whether the desired output voltage is 1.1 V (solid line 240); 1.0 V (dashed line 242), or 0.6 V (dot-dash line 244, which is obscured in part by solid line 240). The straight-through power ratio is at or above 90% at an input voltage of 52 V, for an output voltage of 1.1 V; and at an input voltage of 49 V, for an output voltage of 1.0 V.

FIG. 10 schematically depicts power converter 100, 200 within an on-board charger 310 of electric vehicle 300. While only one power converter 100, 200 is depicted, it is possible to parallelize converters 100, 200 in order to obtain more power. The power density of power converter 100, 200 may be higher than 50 kW/dm³. Advantageously, the power converters 100 may be suitable for a very wide input and output voltage range, and may deliver a high power density at comparatively low cost.

The descriptions of the various implementations of the present disclosure have been presented for purposes of illustration, but are not intended to be exhaustive or limited to the implementations disclosed. Many modifications and variations will be apparent to those of ordinary skill in the art without departing from the scope of the described implementations. The terminology used herein was chosen to best explain the principles of the implementations, the practical application or technical improvement over technologies found in the marketplace, or to enable others of ordinary skill in the art to understand the implementations disclosed herein.

It is expected that during the life of a patent maturing from this application many relevant converters, transformers, on-board chargers, and electric vehicles will be developed and the scope of the terms converter, transformer, on-board charger, or electric vehicle is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any implementation described as "exemplary" is not necessarily to be construed as preferred or advantageous over other implementations and/or to exclude the incorporation of features from other implementations.

The word "optionally" is used herein to mean "is provided in some implementations and not provided in other implementations". Any particular implementation of the disclosure may include a plurality of "optional" features unless such features conflict.

Throughout this application, various implementations of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the disclosure, which are, for clarity, described in the context of separate implementations, may also be provided in combination in a single implementation. Conversely, various features of the disclosure, which are, for brevity, described in the context of a single implementation, may also be provided separately or in any suitable subcombination or as suitable in any other described implementation of the disclosure. Certain features described in the context of various implementations are not to be considered essential features of those implementations, unless the implementation is inoperative without those elements.

The scope of protection shall be defined by the appended claims.

## Claims

1. A power converter (100), comprising:
an input power source (101);
a transformer isolated open loop converter (104) comprising at least one primary winding (106) and a plurality of secondary windings (108a-n), wherein the plurality of secondary windings comprises at least a first secondary winding (108a) and a second secondary winding (108b), wherein the first and the second secondary windings have a different output voltage;
a plurality of DC/DC closed loop converters (114a-n), wherein an input of each of the DC/DC closed loop converters (114a-n) is connected to an output of a respective secondary winding (108a-n), wherein the number of secondary windings (108a-n) is the same as the number of DC/DC closed loop converters (114a-n), and wherein the first secondary winding is connected to a first DC/DC closed loop converter (114a) and the second secondary winding is connected to a second DC/DC closed loop converter (114b);
wherein each of the plurality of DC/DC closed loop converters (114a-n) is switchable between a straight-through operating state and a closed-loop operating state, wherein in the straight-through operating state, power passes directly through a closed-loop converter (114a-n) without being modified;
wherein an output voltage of the plurality of DC/DC closed loop converters (114a-n) is connected in series to determine an output voltage of the power converter (100);
wherein:
in a first voltage range, at least the first DC/DC closed loop converter (114a) is configured to be operated in a straight-through operating state and at least the second DC/DC closed loop converter (114b) is configured to be operated in a closed-loop operating state, and
in a second voltage range, at least the first DC/DC closed loop converter (114a) is configured to be operated in a closed-loop operating state and at least the second DC/DC closed loop converter (114b) is configured to be operated in a straight-through operating state,
such that most of the power is converted by the transformer isolated open loop converter and the at least one DC/DC closed loop converter operating in the straight-through state.

2. The power converter (100) of claim 1, wherein the plurality of DC/DC closed loop converters (114an) comprises at least one voltage step down converter.

3. The power converter (100) of any of claims 1-2, wherein at least 90% of the output voltage derives from the DC/DC closed loop converter in the straight-through operating state.

4. The power converter (100) of any of claims 1-3, wherein at least 98% of the output voltage derives from a DC/DC closed loop converter in the straight-through operating state when the output voltage of the power converter is 380 V dc.

5. An electric vehicle (300) with an on-board charger (310) incorporating the power converter (100) of any of claims 1-4.

6. A method of converting power by operating a power converter according to any one of claims 1 to 4, the method comprising:
inputting power into the power converter (100) ;
transmitting power through the transformer isolated open loop converter (104) and plurality of DC/DC closed loop converters (114a-n);
bridging the power output from the plurality of DC/DC closed loop converters (114a-n) into a bridge circuit; and
outputting converted power from the power converter (100);
wherein the method comprises:
in a first voltage range, configuring at least the first DC/DC closed loop converter (114a) to operate in a straight-through operating state and at least the second DC/DC closed loop converter (114b) to operate in a closed-loop operating state, and
in a second voltage range, configuring at least the first DC/DC closed loop converter (114a) to operate in a closed-loop operating state and at least the second DC/DC closed loop converter (114b) to operate in a straight-through operating state,
such that most of the power is converted by the transformer isolated open loop converter and the at least one DC/DC closed loop converter operating in the straight-through state.

7. The method of claim 6, wherein the plurality of DC/DC closed loop converters (114a-n) comprise at least one voltage step down converter.

8. The method of claim 6 or 7, wherein the outputting step comprises outputting a voltage of between 0 and 500 volts.

9. The method of claim 8, further comprising transmitting at least 90% of the outputted converted power through a DC/DC closed loop converter (114a-n) in the straight-through operating state.

10. The method of any of claims 8 or 9, further comprising achieving a straight-through power ratio of at least 98% when the output voltage of the power converter (100) is 380 V dc.

## Patentansprüche

1. Leistungswandler (100), der Folgendes umfasst:
eine Eingangsleistungsquelle (101);
einen als Transformator isolierten Wandler mit offener Steuerung (104), umfassend zumindest eine primäre Wicklung (106) und mehrere sekundäre Wicklungen (108a-n), wobei die mehreren sekundären Wicklungen zumindest eine erste sekundäre Wicklung (108a) und eine zweite sekundäre Wicklung (108b) umfassen, wobei die erste und die zweite sekundäre Wicklung eine unterschiedliche Ausgangsspannung aufweisen;
mehrere DC/DC-Wandler mit geschlossener Steuerung (114a-n), wobei ein Eingang jedes der DC/DC-Wandler mit geschlossener Steuerung (114a-n) mit einem Ausgang einer entsprechenden sekundären Wicklung (108a-n) verbunden ist, wobei die Anzahl von sekundären Wicklungen (108a-n) die gleiche wie die Anzahl von DC/DC-Wandlern mit geschlossener Steuerung (114a-n) ist und wobei die erste sekundäre Wicklung mit einem ersten DC/DC-Wandler mit geschlossener Steuerung (114a) verbunden ist und die zweite sekundäre Wicklung mit einem zweiten DC/DC-Wandler mit geschlossener Steuerung (114b) verbunden ist,
wobei jeder der mehreren DC/DC-Wandler mit geschlossener Steuerung (114a-n) zwischen einem Durchgangs-Betriebszustand und einem Betriebszustand mit geschlossener Steuerung umschaltbar ist, wobei im Durchgangs-Betriebszustand Leistung direkt durch einen Wandler mit geschlossener Steuerung (114a-n) läuft, ohne modifiziert zu werden,
wobei eine Ausgangsspannung der mehreren DC/DC-Wandler mit geschlossener Steuerung (114a-n) in Reihe verbunden ist, um eine Ausgangsspannung des Leistungswandlers (100) zu bestimmen;
wobei:
in einem ersten Spannungsbereich, zumindest der erste DC/DC-Wandler mit geschlossener Steuerung (114a) dazu ausgelegt ist, in einem Durchgangs-Betriebszustand betrieben zu werden, und zumindest der zweite DC/DC-Wandler mit geschlossener Steuerung (114b) dazu ausgelegt ist, in einem Betriebszustand mit geschlossener Steuerung betrieben zu werden, und
in einem zweiten Spannungsbereich, zumindest der erste DC/DC-Wandler mit geschlossener Steuerung (114a) dazu ausgelegt ist, in einem Betriebszustand mit geschlossener Steuerung betrieben zu werden, und zumindest der zweite DC/DC-Wandler mit geschlossener Steuerung (114b) dazu ausgelegt ist, in einem Durchgangs-Betriebszustand betrieben zu werden,
sodass der Großteil der Leistung durch den als Transformator isolierten Wandler mit offener Steuerung und den zumindest einen DC/DC-Wandler mit geschlossener Steuerung, der im Durchgangszustand betrieben wird, umgewandelt wird.

2. Leistungswandler (100) nach Anspruch 1, wobei die mehreren DC/DC-Wandler mit geschlossener Steuerung (114a-n) zumindest einen Spannungsabwärtswandler umfassen.

3. Leistungswandler (100) nach einem der Ansprüche 1-2, wobei mindestens 90 % der Ausgangsspannung vom DC/DC-Wandler mit geschlossener Steuerung im Durchgangs-Betriebszustand abgeleitet werden.

4. Leistungswandler (100) nach einem der Ansprüche 1-3, wobei mindestens 98 % der Ausgangsspannung von einem DC/DC-Wandler mit geschlossener Steuerung im Durchgangs-Betriebszustand abgeleitet werden, wenn die Ausgangsspannung des Leistungswandlers 380 Vdc ist.

5. Elektrofahrzeug (300) mit einem Bordladegerät (310), das den Leistungswandler (100) nach einem der Ansprüche 1-4 beinhaltet.

6. Verfahren zum Umwandeln von Leistung durch Betreiben eines Leistungswandlers nach einem der Ansprüche 1 bis 4, wobei das Verfahren Folgendes umfasst:
Einspeisen von Leistung in den Leistungswandler (100);
Übertragen von Leistung durch den als Transformator isolierten Wandler mit offener Steuerung (104) und mehrere DC/DC-Wandler mit geschlossener Steuerung (114a-n); Überbrücken des Leistungsausgangs von den mehreren DC/DC-Wandlern mit geschlossener Steuerung (114a-n) in eine Brückenschaltung; und
Ausgeben von umgewandelter Leistung vom Leistungswandler (100);
wobei das Verfahren Folgendes umfasst:
in einem ersten Spannungsbereich, Auslegen zumindest des ersten DC/DC-Wandlers mit geschlossener Steuerung (114a) zum Arbeiten in einem Durchgangs-Betriebszustand und zumindest des zweiten DC/DC-Wandlers mit geschlossener Steuerung (114b) zum Arbeiten in einem Betriebszustand mit geschlossener Steuerung, und
in einem zweiten Spannungsbereich, Auslegen zumindest des ersten DC/DC-Wandlers mit geschlossener Steuerung (114a) zum Arbeiten in einem Betriebszustand mit geschlossener Steuerung und zumindest des zweiten DC/DC-Wandlers mit geschlossener Steuerung (114b) zum Arbeiten in einem Durchgangs-Betriebszustand, sodass der Großteil der Leistung durch den als Transformator isolierten Wandler mit offener Steuerung und den zumindest einen DC/DC-Wandler mit geschlossener Steuerung, der im Durchgangszustand betrieben wird, umgewandelt wird.

7. Verfahren nach Anspruch 6, wobei die mehreren DC/DC-Wandler mit geschlossener Steuerung (114a-n) zumindest einen Spannungsabwärtswandler umfassen.

8. Verfahren nach Anspruch 6 oder 7, wobei der Ausgabeschritt Ausgeben einer Spannung zwischen 0 und 500 Volt umfasst.

9. Verfahren nach Anspruch 8, ferner umfassend Übertragen von mindestens 90 % der ausgegebenen umgewandelten Leistung durch einen DC/DC-Wandler mit geschlossener Steuerung (114a-n) im Durchgangs-Betriebszustand.

10. Verfahren nach einem der Ansprüche 8 oder 9, ferner umfassend Erreichen eines Durchgangs-Leistungsverhältnisses von mindestens 98 %, wenn die Ausgangsspannung des Leistungswandlers (100) 380 Vdc ist.

## Revendications

1. Convertisseur de puissance (100), comprenant :
une source de puissance d'entrée (101) ;
un convertisseur en boucle ouverte isolé par transformateur (104) comprenant au moins un enroulement primaire (106) et une pluralité d'enroulements secondaires (108a-n), la pluralité d'enroulements secondaires comprenant au moins un premier enroulement secondaire (108a) et un deuxième enroulement secondaire (108b), les premier et deuxième enroulements secondaires ayant une tension de sortie différente ;
une pluralité de convertisseurs CC/CC en boucle fermée (114a-n), une entrée de chacun des convertisseurs CC/CC en boucle fermée (114a-n) étant reliée à une sortie d'un enroulement secondaire (108a-n) respectif, le nombre d'enroulements secondaires (108a-n) étant identique au nombre de convertisseurs CC/CC en boucle fermée (114a-n), et le premier enroulement secondaire étant relié à un premier convertisseur CC/CC en boucle fermée (114a) et le deuxième enroulement secondaire étant relié à un deuxième convertisseur CC/CC en boucle fermée (114b) ;
dans lequel chaque convertisseur de la pluralité de convertisseurs CC/CC en boucle fermée (114a-n) peut commuter entre un état de fonctionnement direct et un état de fonctionnement en boucle fermée, dans lequel dans l'état de fonctionnement direct, l'énergie passe directement à travers un convertisseur en boucle fermée (114a-n) sans être modifiée ;
dans lequel une tension de sortie de la pluralité de convertisseurs CC/CC en boucle fermée (114a-n) est reliée en série pour déterminer une tension de sortie du convertisseur de puissance (100) ;
dans lequel :
dans une première plage de tensions, au moins le premier convertisseur CC/CC en boucle fermée (114a) est configuré pour fonctionner dans un état de fonctionnement direct et au moins le deuxième convertisseur CC/CC en boucle fermée (114b) est configuré pour fonctionner dans un état de fonctionnement en boucle fermée, et
dans une deuxième plage de tensions, au moins le premier convertisseur CC/CC en boucle fermée (114a) est configuré pour fonctionner dans un état de fonctionnement en boucle fermée et au moins le deuxième convertisseur CC/CC en boucle fermée (114b) est configuré pour fonctionner dans un état de fonctionnement direct,
de telle sorte que la majeure partie de l'énergie soit convertie par le convertisseur en boucle ouverte isolé par transformateur et l'au moins un convertisseur CC/CC en boucle fermée fonctionnant dans l'état direct.

2. Convertisseur de puissance (100) selon la revendication 1, dans lequel la pluralité de convertisseurs CC/CC en boucle fermée (114a-n) comprend au moins un convertisseur abaisseur de tension.

3. Convertisseur de puissance (100) selon l'une quelconque des revendications 1 et 2, dans lequel au moins 90 % de la tension de sortie provient du convertisseur CC/CC en boucle fermée dans l'état de fonctionnement direct.

4. Convertisseur de puissance (100) selon l'une quelconque des revendications 1 à 3, dans lequel au moins 98 % de la tension de sortie provient d'un convertisseur CC/CC en boucle fermée dans l'état de fonctionnement direct lorsque la tension de sortie du convertisseur de puissance est de 380 V cc.

5. Véhicule électrique (300) muni d'un chargeur de bord (310) incorporant le convertisseur de puissance (100) selon l'une quelconque des revendications 1 à 4.

6. Procédé de conversion de puissance consistant à utiliser un convertisseur de puissance selon l'une quelconque des revendications 1 à 4, le procédé comprenant les étapes consistant à :
introduire de l'énergie dans le convertisseur de puissance (100) ;
transmettre l'énergie à travers le convertisseur en boucle ouverte isolé par transformateur (104) et une pluralité de convertisseurs CC/CC en boucle fermée (114a-n) ;
acheminer l'énergie sortant de la pluralité de convertisseurs CC/CC en boucle fermée (114a-n) vers un circuit de pont ; et
faire sortir l'énergie convertie du convertisseur de puissance (100) ;
le procédé comprenant les étapes consistant à :
dans une première plage de tensions, configurer au moins le premier convertisseur CC/CC en boucle fermée (114a) pour le faire fonctionner dans un état de fonctionnement direct et au moins le deuxième convertisseur CC/CC en boucle fermée (114b) pour le faire fonctionner dans un état de fonctionnement en boucle fermée, et
dans une deuxième plage de tensions, configurer au moins le premier convertisseur CC/CC en boucle fermée (114a) pour le faire fonctionner dans un état de fonctionnement en boucle fermée et au moins le deuxième convertisseur CC/CC en boucle fermée (114b) pour le faire fonctionner dans un état de fonctionnement direct, de telle sorte que la majeure partie de l'énergie soit convertie par le convertisseur en boucle ouverte isolé par transformateur et l'au moins un convertisseur CC/CC en boucle fermée fonctionnant dans l'état direct.

7. Procédé selon la revendication 6, dans lequel la pluralité de convertisseurs CC/CC en boucle fermée (114a-n) comprend au moins un convertisseur abaisseur de tension.

8. Procédé selon la revendication 6 ou 7, dans lequel l'étape de sortie consiste à délivrer en sortie une tension comprise entre 0 et 500 volts.

9. Procédé selon la revendication 8, comprenant également la transmission d'au moins 90 % de l'énergie de sortie convertie à travers un convertisseur CC/CC en boucle fermée (114a-n) dans l'état de fonctionnement direct.

10. Procédé selon la revendication 8 ou 9, comprenant également l'obtention d'un rapport de puissance directe d'au moins 98 % lorsque la tension de sortie du convertisseur de puissance (100) est de 380 V cc.
